# EUROPÄISCHE PATENTSCHRIFT

(11) **EP 0 593 909 B1**
(45) Veröffentlichungstag und Bekanntmachung des Hinweises auf die Patenterteilung: **12.08.1998**
(21) Anmeldenummer: 93115005.6
(22) Anmeldetag: 17.09.1993
(51) Int. Cl.: F16B 5/12

(54) **Kunststoff-Halteclip für Schutz-, Zierleisten oder dergleichen, insbesondere an Kraftfahrzeugen**
Plastic clip for decorative or protective strips or the like in particular for cars
Clip d'ancrage en plastique pour enjoliveurs, protecteurs ou similaires, en particulier pour voitures

(30) Priorität: 23.10.1992 DE 9214388 U
(43) Veröffentlichungstag der Anmeldung: 27.04.1994
(73) Patentinhaber: K.K.P. KONSTRUKTIVE KUNSTSTOFF-PRODUKTE HANDELSGESELLSCHAFT mbH, D-97638 Mellrichstadt (DE)
(72) Erfinder: Hölzer, Eberhard, 97332 Volkach-Gaibach (DE)
(74) Vertreter: Böck, Bernhard

(56) Entgegenhaltungen:
- EP-A- 0 487 965
- FR-A- 2 622 258
- FR-A- 2 649 762

## Beschreibung

Die Erfindung bezieht sich auf einen Kunststoff-Halteclip nach dem Oberbegriff des Ansprüchs 1.

Aus der EP-A 487 965 ist ein zweiteiliger Kunststoff-Halteclip mit einem Verankerungsteil und einem Kupplungsteil bekannt. Das Verankerungsteil weist federnde Befestigungselemente auf, die zur Befestigung des Halteclips in einem Aufnahmeloch eines Blechteils dienen. Dabei stützt sich das Verankerungsteil an einem Abstützelement ab. Das Kupplungsteil verbindet den Halteclip mit einer Zierleiste.

Auch die FR-A-2 622 258 zeigt einen zweiteiligen Kunststoff-Halteclip mit einem Verankerungsteil und einem Kupplungsteil. Zur Aufrechterhaltung einer Rastverbindung in Abhebrichtung ist das Kupplungsteil in einem Führungsschlitz des Verankerungsteils unter Aufrechterhaltung einer Rastverbindung in Abhebrichtung linear geführt, so daß das Kupplungsteil und das Verankerungsteil gegeneinander verschiebbar sind.

In jüngster Zeit werden jedoch die Schutz- bzw. Zierleisten für Kraftfahrzeuge bereits beim Unterlieferanten fertig konfektioniert, d.h., mit an den leisten starr befestigten Halteclips versehen. Beim Kraftfahrzeughersteller werden dann diese Schutz- bzw. Zierleisten nur noch montiert, indem man ihre Halteclips in den Aufnahmelöchern im Karosserieblech verankert. Aufgrund der praktisch unvermeidbaren Toleranzen in den Lochabständen kommt es jedoch bei dieser Montage immer wieder zu Schwierigkeiten, denn die Halteclips sind in vorbestimmten Abständen, wie schon oben erwähnt, an den Leisten starr befestigt.

Der Erfindung liegt daher die Aufgabe zugrunde, für obiges Problem eine Lösung anzubieten, welche den erforderlichen Toleranzausgleich ohne Beeinträchtigung der Montage und bei möglichst einfachem Aufbau des Halteclips ermöglicht.

Diese Aufgabe wird durch einen Halteclip mit den Merkmalen des Anspruchs 1 gelöst.

Der Halteclip ist zweigeteilt, wobei das eine Teil das Kupplungsteil und das andere Teil das Verankerungsteil ist und das Kupplungsteil und Verankerungsteil gegenseitig linear verschieblich miteinander verbunden sind. Hierzu ist das Verankerungsteil in einem durch Führungsleisten gebildeten Führurgsschlitz des Kupplungsteils geführt. Das Kupplungsteil kann dabei starr mit der Schutz- oder Zierleiste oder dergleichen verbunden sein und bei der Montage dieser Leisten z.B. an der Karosserie eines Kraftfahrzeugs können Toleranzen in den Abständen der Aufnahme löcher im Karosserieblech einfach dadurch ausgeglichen werden, daß man die Verankerungsteile der entsprechenden Halteclips um das erforderliche Ausmaß gegenüber ihren Kupplungsteilen verschiebt.

Dabei ist eine Zwischenraste für des Verankerungsteil vorgesehen.

Erfindungsgemäß ist die Zwischenraste in den Führungsleisten ausgebildet.

Vorzugsweise ist diese Zwischenraste mittig im Führungsschlitz angeordnet und bei der montagebereiten Schutz-, bzw. Zierleiste wird das Verankerungsteil vorteilhaft durch diese Zwischenraste gehalten, so daß man bei Toleranzen in den Lochabständen eine Verschiebung des Verankerungsteils, je nach Bedarf in die eine oder andere Richtung vornehmen kann.

Ausgestaltungen der Erfindung gehen aus den Unteransprüchen hervor. So enthält bei einer bevorzugten Ausführungsform der Erfindung der Führungsschlitz für das Verankerungsteil zwei Endanschläge.

Nach noch einer weiteren Ausführugnsform der Erfindung ist das Verankerungsteil in dem Führungsschlitz des Kupplungsteils klemmend geführt. Nach erfolgter Montage wird dadurch ein fester Sitz der Schutz- oder Zierleiste an der Kraftfahrzeugkarosserie gewährleistet.

Eine bevorzugte weitere Ausgestaltung der Erfindung ist dadurch gekennzeichnet, daß das Kupplungsteil einen Rahmen aufweist, daß sich von zwei einander gegenüberliegenden Teilen des Rahmens federnde Führungsleisten nach innen erstrecken, die, jeweils im Schnitt betrachtet, einen im wesentlichen U-förmigen Querschnitt aufweisen und den Führungsschlitz für das Verankerungsteil begrenzen, welches mittels eines T-förmigen Führungsteils in dem Führungsschlitz geführt ist.

Zweckmäßig ist nach noch einer weiteren Ausführungsform der Erfindung das T-förmige Führungsteil an der einen Seite eines tellerförmig ausgebildeten Abstützelements angeformt und auf den die Spreizarme tragenden Vorsprung ausgefluchtet, der an der anderen Seite des Abstützelements angeformt ist.

Noch eine weitere Ausgestaltung der Erfindung ist dadurch gekennzeichnet, daß die den Führungsschlitz begrenzenden Ränder der Führungsleisten an den Enden mit in den Führungsschlitz geringfügig hineinragenden Vorsprüngen und zwischen den Enden mit einander gegenüberliegenden flachen Aussparungen versehen sind, um die Endanschläge bzw. Zwischenraste für das Verankerungsteil auszubilden.

Zweckmäßig sind ferner an beiden Seiten des Mittelstegs des T-förmigen Führungsteils flache Vorsprünge ausgebildet, die mit den Vorsprüngen an den Führungsleisten bzw. den Aussparungen in den Führungsleisten des Kupplungsteils zusammenarbeiten.

Die Erfindung wird anschließend anhand der Zeichnungen von Ausführungsbeispielen erläutert. Es zeigen:
- Figur 1: eine Schrägansicht von einem Teil einer Schutzleiste, die mittels der Kunststoff-Halteclips gemäß der Erfindung an einer Kraftfahrzeug-Karosserie montiert ist;
- Figur 2: ein Ausschnitt aus einem Karosserieblech mit einigen Aufnahmelöchern, in welche die Kunststoff-Halteclips bei der Montage der Schutzleiste einzuschnappen sind;
- Figur 3: eine Ansicht eines Kunststoff-Halteclips gemäß der Erfindung von unten, teilweise im Schnitt, um den Führungsschlitz für das Verankerungsteil des Halteclips zu zeigen;
- Figur 4: eine Stirnansicht des Halteclips der Figur 3, teilweise im Schnitt und
- Figur 5: eine der Figur 3 ähnliche Ansicht eines Halteclips von unten, jedoch mit modifziertem Kupplungsteil, welches einen kurzen Führungsschlitz für das Verankerungsteil enthält.

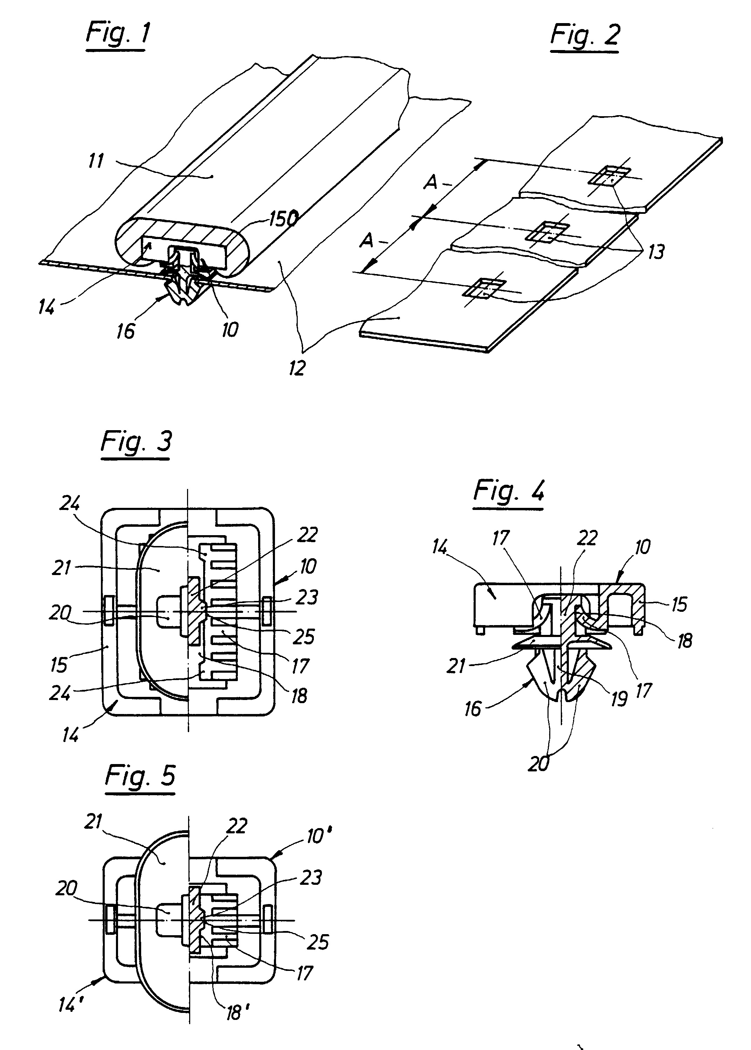

Der in den Figuren 3 und 4 gezeigte Kunststoff-Halteclip 10 dient dazu, beispielsweise eine Schutzleiste 11 (Figur 1) am Karosserieblech 12 eines Kraftfahrzeugs zu befestigen. Solche Schutzleisten 11 sind zu diesem Zweck mit zahlreichen in gegenseitigem Abstand voneinander starr angeordneten bzw. eingebauten Halteclips 10 versehen. Da jedoch die Abstände A der Aufnahmelöcher 13 für diese Halteclips 10 im Karosserieblech 12 (Fig.2) praktisch unvermeidbare Toleranzen aufweisen, ist es erforderlich, daß die Halteclips 10 diese ausgleichen können. Zu diesem Zweck sind die Halteclips 10 aus zwei Teilen aus Kunststoff hergestellt, welche gegenseitig linear verschieblich miteinander verbunden sind. Bei dem einen Teil handelt es sich um das Kupplungsteil 14, welches in dem an einer Seite offenen Hohlraum 150 der Schutzleiste 11 befestigt ist, während das andere Teil ein Verankerungsteil 16 ist, das in eines der Aufnahmelöcher 13 des Karosserieblechs 12 eingeclipst werden kann. Das Kupplungsteil 14 weist einen Rahmen 15 auf, wobei sich von zwei einander gegenüberliegenden Rahmenteilen federnde Führungsleisten 17 nach innen erstrecken, die jeweils einen im wesentlichen U-förmigen Querschnitt besitzen. Diese federnden Führungsleisten 17 begrenzen einen Führungsschlitz 18 für das Verankerungsteil 16.

Das Verankerungsteil 16 ist, wie schon erwähnt, zum Einschnappen bzw. Einclipsen in eines der Aufnahmelöcher 13 ausgebildet und etnhält zu diesem Zweck beispielsweise zwei an einem stegförmigen Vorsprung 19 einander gegenüberliegend angeformte Spreizfüße 20, wobei der stegförmige Vorsprung 19 mittig an einem tellerförmig ausgebildeten Abstützelement 21 angeformt ist, das gleichzeitig auch eine Abdichtfunktion erfüllt. An der gegenüberliegenden Seite des tellerförmigen Abstützelements 21 ist ein T-förmiges Führungsteil 22 angeformt und zwar ausgefluchtet auf den mittigen stegförmigen Vorsprung 19. Das T-förmige Führungsteil 22 weist an beiden Seiten seines Mittelstegs flache Vorsprünge 23 auf. Das Verankerungsteil 16 ist mittels des T-förmigen Führungsteils 22 linear verschieblich in dem Führungsschlitz 18 des Kupplungsteils 14 geführt. Die den Führungsschlitz 18 begrenzenden Ränder der Führungsleisten 17 weisen an beiden Enden des Schlitzes 18 in diesen geringfügig hineinragende Vorsprünge 24 auf, welche Endanschläge für das Führungsteil 22 des Verankerungsteils 16 bilden. Außerdem ist beim Ausführugnsbeispiel nach Figur 3 und 4 in der Mitte des Führungsschlitzes 18 eine Zwischenraste für das Verankerungsteil 16 vorgesehen. Diese Zwischenraste wird durch zwei einander gegenüberliegende, flache Aussparungen 25 in den Rändern der Führungsleisten 17 gebildet, in welche die flachen Vorsprünge 23 am T-förmigen Führungsteil 22 einrasten können (Fig.3).

Bei der montagebereiten Schutzleiste 11 nehmen die Verankerungsteile 16 die vorstehend beschriebene mittige Position in Bezug auf ihre Kupplungsteile 14 ein. Ergeben sich in den Abständen A der Aufnahmelöcher 13 Toleranzen, können die Verankerungsteile 16 in dem Führungsschlitz 18 der Kupplungsteile 14 entsprechend linear verschoben werden. Dabei ist diese lineare Verschiebung durch die die Endanschläge bildenden Vorsprünge 24 begrenzt. Erwähnt sei noch, daß das Verankerungsteil 16 mit seinem T-förmigen Führungsteil 22 in dem Führungsschlitz 18 des Kupplungsteils 14 mit Reibung, d. h. also klemmend geführt ist.

Der in Figur 5 gezeigte Kunststoff-Halteclip 10' entspricht im wesentlichen demjenigen der Figuren 3 und 4 und gleiche Teile sind daher auch mit den selben Bezugszahlen gekennzeichnet. Lediglich das Kupplungsteil 14' ist modifiziert und seine federnden Führungsleisten 17 begrenzen einen relativ kürzeren Führungsschlitz 18' für das Verankerungsteil 16 bzw. dessen T-förmigen Führungsteil 22. Der Führungsschlitz 18' enthält keine Endanschläge für das Verankerungsteil 16.

Es sei bemerkt, daß das Verankerungsteil 16 in Abweichung von den Ausfsührungsbeispielen mit den beiden federnden Spreizfüßen 20 auch andere federnde Befestigungselemente aufweisen kann, die ein Einschnappen des Verankerungsteils 16 in eines der Aufnahmelöcher 13 ermöglichen. Beim Ausführungsbeispiel nach Figur 3 und 4 oder 5 stützen sich nach erfolgter Montage der Schutzleiste 11 die Spreizfüße 20 an der einen Seite (Innenseite) des Karosserieblechs 12 ab, während das Abstützelement 21 an der anderen Seite (Außenseite) des Karosserieblechs 12 anliegt und gleichzeitig das jeweilige Aufnahmeloch 13 gegen Spritzwasserdurchtritt abdichtet.

## Patentansprüche

1. Zweiteiliger Kunststoff-Halteclip für Schutz-, Zierleisten oder dergleichen, insbesondere an Kraftfahrzeugen, mit einem Verankerungsteil (16) und einem Kupplungsteil (14), wobei das Verankerungsteil federnde Befestigungselemente, insbesondere zwei an einem Vorsprung einander gegenüberliegend angeordnete Spreizfüße (20) und ein gegenüber den Spreizfüßen angeordnetes Abstützelement (21) aufweist und zur Befestigung des Halteclips in einem Aufnahmeloch (13) eines Blechteils, insbesondere eines Karosserieblechs (12), dient und das Kupplungsteil den Halteclip mit der Schutzleiste (11) verbindet, wobei das Kupplungsteil (14) zum Ausgleich von Abstandstoleranzen zwischen Aufnahmelöchern (13) einen durch Führungsleisten (17) gebildeten Führungsschlitz (18), der unter Aufrechterhaltung einer Rastverbindung zwischen dem Kupplungsteil und dem Verankerungsteil in Abhebrichtung zur längsverschiebbaren Aufnahme des Verankerungsteils dient, und eine Zwischenraste für das Verankerungsteil aufweist, dadurch **gekennzeichnet**,
daß die Zwischenraste in den Führungsleisten (17) für das Verankerungsteil (16) ausgebildet ist.

2. Halteclip nach Anspruch 1, dadurch gekennzeichnet, daß der Führungsschlitz (18) für das Verankerungsteil (16) zwei Endanschläge (24) enthält.

3. Halteclip nach einem der Ansprüche 1 oder 2, dadurch gekennzeichnet, daß das Verankerungsteil (16) in dem Führungsschlitz (18) des Kupplungsteils (14) klemmend geführt ist.

4. Halteclip nach einem der Ansprüche 2 oder 3, dadurch gekennzeichnet, daß das Kupplungsteil (14) einen Rahmen (15) aufweist, daß sich von zwei einander gegenüberliegenden Teilen des Rahmens (15) federnde Führungsleisten (17) nach innen erstrecken, die, jeweils im Schnitt betrachtet, einen im wesentlichen U-förmigen Querschnitt aufweisen und den Führungsschlitz (18) für das Verankerungsteil (16) begrenzen, welches mittels eines T-förmigen Führungsteils (22) in dem Führungsschlitz (18) geführt ist.

5. Halteclip nach den Ansprüchen 1 und 4, dadurch gekennzeichnet, daß das T-förmige Führungsteil (22) an der einen Seite eines tellerförmig ausgebildeten Abstützelements (21) angeformt und auf den die Spreizarme (20) tragenden Vorsprung (19) ausgefluchtet ist, der an der anderen Seite des Abstützelements (21) angeformt ist.

6. Halteclip nach den Ansprüchen 1 und 2, dadurch gekennzeichnet, daß die den Führungsschlitz (18) begrenzenden Ränder der Führungsleisten (17) an den Enden mit in den Führungsschlitz (18) geringfügig hineinragenden Vorsprünge (24) und zwischen den Enden mit einander gegenüberliegenden flachen Aussparungen (25) versehen sind, um die Endanschläge bzw. Zwischenraste für das Verankerungsteil (16) auszubilden.

7. Halteclip nach den Ansprüchen 4 und 6, dadurch gekennzeichnet, daß an beiden Seiten des Mittelstegs des T-förmigen Führungsteils (22) flache Vorsprünge (23) ausgebildet sind, die mit den Vorsprüngen (24) an den Führungsleisten (17) bzw. den Aussparungen (25) in den Führungsleisten (17) des Kupplungsteils (16) zusammenarbeiten.

## Claims

1. Two-part plastic retaining clip for protective or decorative strips or the like, particularly on motor vehicles, with an anchoring part (16) and a coupling part (14), wherein the anchoring part has resilient fastening elements, particularly two spreading feet (20) disposed opposite one another on a projection and a supporting element (21) disposed opposite the spreading feet, and serves for fastening the retaining clip in a receiving hole (13) in a sheet-metal part, particularly in a body sheet (12), and the coupling part connects the retaining clip to the protective strip (11), and wherein the coupling part (14) has, for the purpose of compensating for distance tolerances between receiving holes (13), a guide slot (18) which is formed by guide strips (17) and serves, while maintaining a notching connection between the coupling part and the anchoring part in the direction of lifting off, for receiving the anchoring part in a longitudinally displaceable manner, and an intermediate notch for the anchoring part,
**characterised in that**
the intermediate notch is constructed in the guide strips (17) for the anchoring part (16).

2. Retaining clip according to claim 1, characterised in that the guide slot (18) for the anchoring part (16) contains two end stops (24).

3. Retaining clip according to one of claims 1 or 2, characterised in that the anchoring part (16) is guided in a wedging manner in the guide slot (18) in the coupling part (14).

4. Retaining clip according to one of claims 2 or 3, characterised in that the coupling part (14) has a frame (15) and that there extend inwards, from two mutually opposite parts of the frame (15), resilient guide strips (17) which, viewed in section in each case, have an essentially U-shaped cross-section and delimit the guide slot (18) for the anchoring part (16) which is guided in the guide slot (18) by means of a T-shaped guide part (22).

5. Retaining clip according to claims 1 and 4, characterised in that the T-shaped guide part (22) is moulded-on on one side of a supporting element (21) of plate-shaped construction and is aligned onto the projection (19) which carries the spreading arms (20) and is moulded-on on the other side of the supporting element (21).

6. Retaining clip according to claims 1 and 2, characterised in that those edges of the guide strips (17) which delimit the guide slot (18) are provided, at the ends, with projections (24) protruding slightly into the guide slot (18) and, between the ends, with mutually opposite, shallow recesses (25), in order to form the end stops and intermediate notches for the anchoring part (16).

7. Retaining clip according to claims 4 and 6, characterised in that there are constructed, on both sides of the central web of the T-shaped guide part (22), low projections (23) which cooperate with the projections (24) on the guide strips (17) and with the recesses (25) in the guide strips (17) of the coupling part (16).

## Revendications

1. Agrafe de fixation en deux parties en matière plastique, pour baguettes de protection, de décoration, ou similaires, en particulier sur des véhicules automobiles, comprenant une partie d'ancrage (16) et une partie d'accouplement (14), la partie d'accouplement comportant des éléments de fixation faisant ressort, en particulier deux pattes d'écartement (20) opposées l'une à l'autre, disposées sur une saillie, et un élément d'appui (21) disposé face aux pattes d'écartement, et servant à fixer l'agrafe de fixation dans un trou récepteur (13) ménagé dans une pièce en tôle, en particulier une tôle de carrosserie (12), la partie d'accouplement reliant l'agrafe de fixation à la baguette de protection (11), la partie d'accouplement (14) comportant, pour permettre une compensation des tolérances d'entr'axe des trous récepteurs (13), une fente de guidage (18) constituée par des barrettes de guidage (17), la fente servant à constituer un logement permettant un déplacement coulissant longitudinal de la partie d'ancrage tout en maintenant une liaison par enclenchement entre la partie d'accouplement et la partie d'ancrage dans le sens du décollement, ainsi qu'un cran intermédiaire pour la partie d'ancrage,
caractérisée en ce que le cran intermédiaire est aménagé dans les barrettes de guidage (17) pour la partie d'ancrage (16).

2. Agrafe de fixation selon la revendication 1, caractérisée en ce que la fente de guidage (18) pour la partie d'ancrage (16) comporte deux butées de fin de course (24).

3. Agrafe de fixation selon l'une des revendications 1 ou 2, caractérisée en ce que la partie d'ancrage (16) est guidée avec serrage dans la fente de guidage (18) de la partie d'accouplement (14).

4. Agrafe de fixation selon l'une des revendications 2 ou 3, caractérisée en ce que la partie d'accouplement (14) comporte un cadre (15), en ce que deux barrettes de guidage élastiques (17) s'étendent vers l'intérieur, depuis deux parties opposées du cadre (15), ces barrettes présentant essentiellement une forme de section en U, vue en coupe, et délimitant la fente de guidage (18) pour la partie d'ancrage (16) qui est guidée dans la fente de guidage (18) par l'intermédiaire d'un élément de guidage (22) en forme de T.

5. Agrafe de fixation selon les revendications 1 et 4, caractérisée en ce que l'élément de guidage (22) en forme de T est formé sur, en faisant corps avec, un côté d'un élément d'appui (21) configuré en forme de cuvette, et est aligné sur la saillie (19) portant les pattes d'écartement (20), qui est conformée sur et fait corps avec l'autre côté de l'élément d'appui (21).

6. Agrafe de fixation selon les revendications 1 et 2, caractérisée en ce que les bords des barrettes de guidage (17), qui délimitent la fente de guidage (18), sont pourvus, à leurs extrémités, d'épaulements (24) faisant légèrement saillie à l'intérieur de la fente de guidage (18), et sont pourvus, entre les extrémités, d'évidements plats (25) opposés l'un à l'autre, de manière à constituer respectivement les butées de fin de course et le cran intermédiaire pour la partie d'ancrage (16).

7. Agrafe de fixation selon les revendications 4 et 6, caractérisée en ce que des bossages plats (23) sont aménagés des deux côtés de l'âme centrale de l'élément de guidage (22) en T et coopèrent avec les épaulements (24) formés sur les barrettes de guidage (17) et avec les évidements (25) ménagés dans les barrettes de guidage (17) de la partie d'accouplement (16).
